(19) Europäisches Patentamt / European Patent Office / Office européen des brevets

(11) **EP 3 001 381 A1**

(12) **EUROPEAN PATENT APPLICATION**

(43) Date of publication:
**30.03.2016 Bulletin 2016/13**

(51) Int Cl.:
*G06T 5/00* (2006.01)   *G06T 5/50* (2006.01)
*G06T 7/40* (2006.01)   *H04N 1/60* (2006.01)

(21) Application number: **14306473.1**

(22) Date of filing: **24.09.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Thomson Licensing**
  **92130 Issy-les-Moulineaux (FR)**
• **CENTRE NATIONAL DE**
  **LA RECHERCHE SCIENTIFIQUE -CNRS-**
  **75794 Paris Cedex 16 (FR)**
• **Université Jean Monnet de Saint-Etienne**
  **42023 Saint-Etienne Cedex 2 (FR)**

(72) Inventors:
• **Sheikh Faridul, Hasan**
  **35576 CESSON-SÉVIGNÉ (FR)**
• **Stauder, Jurgen**
  **35576 CESSON-SÉVIGNÉ (FR)**
• **Chamaret, Christel**
  **35576 CESSON-SÉVIGNÉ (FR)**
• **Tremeau, Alain**
  **42000 SAINT-ETIENNE (FR)**

(74) Representative: **Browaeys, Jean-Philippe**
  **Technicolor**
  **1, rue Jeanne d'Arc**
  **92443 Issy-les-Moulineaux (FR)**

(54) **Method for building a set of color correspondences from a set of feature correspondences in a set of corresponding images**

(57)    For each feature correspondence, the method comprises the following steps:
- warping the spatial neighborhood of a feature point such that, after warping, the spatial neighborhoods of the feature points corresponding to each other in said feature correspondence over the different images correspond spatially themselves to each other,
- selecting at least three first colors at three different spatial positions of the spatial neighborhood in a first image and a second color in the corresponding spatial neighborhood of another other image, resulting in a set of at least three local color correspondences, each color correspondence having a first color in said first image and a second color in the other image.

Fig. 1

**Description**

Technical Field

The invention relates to color and feature correspondences between different images or views, and to the compensation of colors between these images.

Background Art

Applications involving multiple views from multiple directions of the same scene, such as stereo imaging in the meaning of stereoscopic or 3-D imaging, or applications involving multiple views of a scene at different time instants while scene elements are changing, such as feature film production, video capturing or broadcasting, or applications involving multiple versions of originally the same image, such as two different scans of the same film negative, suffer from geometric differences and from color differences between these different views of the same scene or different versions of the same image. Stereoscopic imaging or multiple views requires a minimum of the capture of two pictures simulating our two eyes, the left image or left view and the right image or right view. Geometric differences between these views or versions can be caused by parallax in case of stereo images and by cropping, by zoom, by rotation, or by combinations of them, or by other geometric transforms in case of film scans. In case of capturing views at different time instants, geometric differences can be caused by object or by camera motion. Color differences are caused for example by shading, by change of illumination direction, color or distribution, by specular reflections, by cast shadows and other by photometric effects. Color differences are also being caused for example by non-calibrated cameras, by non-calibrated film scanners, by automatically changing exposure settings, by automatic white balancing or even by physical light effects in the scene.

Color difference compensation is often the first step in image or video signal processing of multiple views or stereoscopic pictures of the same scene as other steps such as disparity estimation or data compression benefited from low color difference. In case of feature film, video and broadcasting, color differences can disturb artistically the produced content, notably when editing involves the temporal reordering of images.

One approach for the compensation of color differences between images is color mapping, also called color transfer, color compensation or color correction. Such a color mapping has the task of mapping the color channel coordinates of an image to be suitable for further color signal processing, color signal transmission or color reproduction.

Without restricting the range of applications of the discussed methods, let us focus on the case of two images showing the same scene from two different points of view. We call these images "left image" and "right image". They may have been captured by a stereo camera, for example. Since in general these two images are not geometrically aligned, it is not clear which part of the left image corresponds to which part of the right image, and even less which colors from the left image corresponds to which - potentially different - colors from the right image.

Known color compensation methods starts therefore typically with finding Geometric Feature Correspondences (GFC) between the two images, using known methods such as Scale Invariant Feature Transformation (SIFT). In this case, GFC is a list of pairs of feature points, each feature point of one image is matched to a feature point of the other image. Feature points are typically described by their spatial position in an image, by their spatial size, their shape or by their orientation. GFC are often used for geometric analysis such as camera parameter estimation, motion estimation or 3D scene reconstruction.

As GFC computation is not free from errors, some of the GFC are considered as wrong and are called "outliers". These outliers are either coming from spatial positioning errors of feature points or from an error in the matching of feature points - so called "false positives". Wrong GFC, outliers, are generally not positioned on the same semantic image details or content in both images, meaning the left and the right images in the case of stereo imaging, or in any two or more images in case of scanning, motion picture, video and broadcasting. There are known methods to remove those outliers, using for instance geometric constraints such as a homographic model, used notably in 3D imaging.

In these known methods, after having removed those outliers from the GFC, a set of pairs of corresponding colors is extracted. In each of these pairs, a color from one image would generally correspond to a color from the other image. Therefore, from this set, a Color Look-Up Table (LUT) can generally be formed that can be used to compensate the colors of one image in order to be closer to the colors of the other image.

There are existing methods to generate the set of pairs of corresponding colors, for example that proposed by HaCohen et al. in their paper entitled "Non-rigid dense correspondence with applications for image enhancement" published in the Proc. of ACM SIGGRAPH 70(9). The main intuition in the work of HaCohen et al. is to start with highly reliable feature matches and "densify" around those initial matches to obtain reliable correspondence regions. Similar approaches have been proposed by Ferrari et al. titled "Simultaneous object recognition and segmentation by image exploration" in ECCV 2004, and Cho et al. entitled "Co-recognition of image pairs by data-driven monte carlo image exploration" In ECCV 2008.

The work of Hacohen et al. is based on "Generalized PatchMatch" with an iterative tonal and color correction of the input image, aggregation of consistent regions, and locally narrowing search range of matched transformation.

These existing color compensation methods have the problem that they depend entirely on the quality of the GFC. Unfortunately, GFC are not always very precise. They suffer from low accuracy in feature's location, shape, and orientation. Main reason for the low accuracy of GFC is estimation errors of feature point detectors due to complex scene geometry, occlusions, and challenging scene illumination. For example, when the curvature of surfaces close to a GFC is high, spatial correspondence of pixels in the neighborhood of a GFC cannot easily be derived from the GFC and extracted color correspondences will be noisy. In general, if the GFC are noisy, the extraction of corresponding colors by known methods may fail completely. In other cases, corresponding colors extracted from noisy GFC by known methods may be noisy themselves.

Summary of invention

A subject of the invention is a method for building a set of color correspondences from a set of feature correspondences between features points in different images, the colors of which are described by color coordinates, the method comprising, for each feature correspondence, the following steps:

- warping the spatial neighborhood of at least one of said feature points such that, after warping, the spatial neighborhoods of the feature points corresponding to each other in said feature correspondence over the different images correspond spatially themselves to each other,
- selecting at least three first colors at three different spatial positions of the spatial neighborhood in a first image, and at least one corresponding second color in the corresponding spatial neighborhood of another other image, resulting in a set of at least three local color correspondences, each color correspondence having a first color in said first image and the at least one corresponding second color in said another image.

Preferably, the method comprises also the steps of:

- fitting at least one color model to the color coordinates of the first and second colors of said set of at least three local color correspondences such that the at least one color model maps, for at least one color channel, the color coordinates of at least three of said first colors to the corresponding color coordinates of the corresponding second colors.
- selecting, among said built local color correspondences, those where at least one color coordinate of the first colors, after being mapped by the color model, is distant less than a defined threshold from the corresponding color coordinate of the second color.

A subject of the invention is also a method for compensating color differences between different images comprising the steps of:

- building a set of feature correspondences between features points of said different images,
- building a set of color correspondences from said set of feature correspondences according the above method of for building a set of color correspondences, and compensating color differences between said different images by replacing the colors of at least one image by the corresponding colors according to said built set of color correspondences.

A subject of the invention is also a method for building a set of color correspondences from a set of feature correspondences between features points in a plurality of different images, the method comprising, for each feature correspondence of said set:

- warping the spatial neighborhood of at least one of the corresponding feature points of said feature correspondence such that, after warping, the spatial positions of pixels in the neighborhoods of the feature points corresponding to each other in said feature correspondence over the different images of said plurality correspond spatially themselves to each other,
- bringing in correspondence the colors of pixels having corresponding spatial positions in the neighborhoods of the feature points of said feature correspondence, to provide a set of at least three local color correspondences.

The second step of the method above preferably starts with selecting at least three pixels at different spatial positions in the spatial neighborhood of each feature point of said feature correspondence such that the spatial position of any selected pixel in the spatial neighborhood of a feature point of said feature correspondence corresponds spatially to the spatial position of a selected pixel in the spatial neighborhood of any other feature point of said feature correspondence.

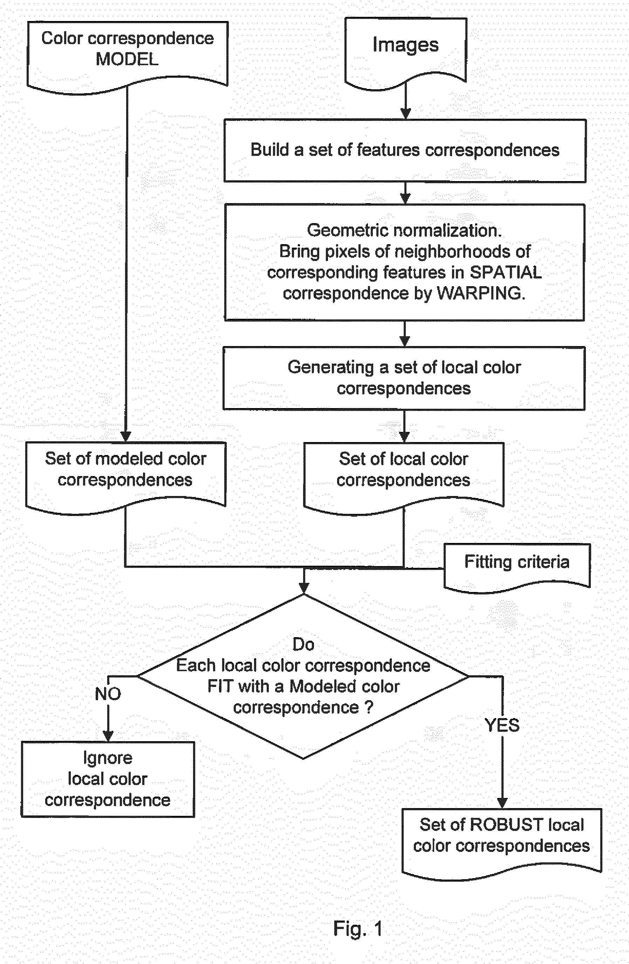

Preferably, the method comprises also, as illustrated on figure 1, a selection, in each provided set of local color correspondences, of color correspondences that fit a color correspondence model according to a defined fitting criterion, to provide a set of local robust color correspondences.

This color correspondence model is such that to a color in an image of said plurality belonging to any local color correspondence of the provided set correspond a color in each of the other images of said plurality, resulting in a set of modeled color correspondences. The set of local robust color correspondences is built with all the local color correspondences that are close enough to their corresponding modeled color correspondences, according to defined fitting criteria. Such a method of selection of color correspondences allows advantageously removing outliers independently of geometric features or constraints of the images.

When the colors of local color correspondences are represented by color coordinates in the three color channels of a RGB color space, the color correspondence model could be for instance the straight line that would approximate the best the local color correspondences of a set local color correspondences in at least one of these color channels. Such a model is then linear in the RGB color space.

According to the method above and as illustrated on figure 1, the color correspondences of this set that do not fit such a linear relationship well enough according to a defined criteria are ignored as being "non robust", i.e. are not part of the set of robust local color correspondences. The defined fitting criteria could be for instance, in said at least one of these color channels, a maximum distance from the straight line representing the linear model, or a distance less than a defined threshold between the position of a local color correspondence and the position of the corresponding modeled color correspondence in a multidimensional space, having as many dimension as there are colors in each color correspondence.

Alternatively, when each color of said pixels is represented by color coordinate in each of the different color channels of a color space, the method comprises also a selection, in each provided set of local color correspondences and among said local color correspondences of said set, any color correspondence having a color which, after being mapped by a color model into mapped colors have color coordinates in the at least one color channel that are distant less than a defined threshold from the corresponding color coordinates of the other colors of this color correspondence, thus resulting in a set of local robust color correspondences. Preferably, said color model is based on a linear relationship between the color coordinates in the said at least one color channel of a color and the color coordinates in the same at least one color channel of said mapped colors.

A subject of the invention is also a method for compensating color differences between different images comprising:

- building a set of feature correspondences between features points of said different images,
- building a set of local color correspondences or a set of local robust color correspondences from said set of feature correspondences according the above method, and compensating color differences between the different images of said plurality by replacing the colors of at least one image of said plurality by their corresponding colors according to said built set of color correspondences or to said built set of robust color correspondences.

A subject of the invention is also an apparatus for building a set of color correspondences in a plurality of different images, comprising:

- a receiving module for receiving said plurality of images,
- a feature correspondences building module for building a set of feature correspondences between features points in the plurality of different images received by said receiving module,
- a warping module configured for warping the spatial neighborhood of at least one of the corresponding feature points of a feature correspondence built by said feature correspondences building module such that, after warping, the spatial positions of pixels in the neighborhoods of the feature points corresponding to each other in said feature correspondence over the different images of said plurality correspond spatially themselves to each other, and
- a generating module for generating a set of at least three local color correspondences by bringing in correspondence colors of pixels having spatial positions that are brought in spatial correspondence by the warping module in the neighborhoods of the feature points of said feature correspondence.

Preferably, the apparatus comprises also a denoising module configured for selecting, in a set of local color correspondences generated by said generating module, color correspondences that fit a color correspondence model according to a defined fitting criterion, resulting in a set of local robust color correspondences.

A subject of the invention is also a system for compensating color differences between different images comprising:

- an apparatus as described above for building a set of color correspondences in a plurality of different images, and
- a color compensation module configured for compensating color differences between the different images of said plurality by replacing the colors of at least one image of said plurality by their corresponding colors according to the set of color correspondences.

This invention may have notably the following advantages over known methods:

1. Robust corresponding colors between different images with given geometrical feature correspondences (GFC) can be found even if the GFC are noisy.
2. Robust corresponding colors extracted from the spatial neighborhood of a single GFC have reduced noise compared to known methods.
3. Corresponding colors can be extracted even from GFC close to object borders showing covering and uncovering effects.
4. Corresponding colors can be extracted even from GFC belonging to surfaces with high curvature.

Brief description of drawings

The invention will be more clearly understood on reading the description which follows, given by way of non-limiting example and with reference to the appended figures in which:

- Figure 1 illustrates a main embodiment of the method of building a set of local robust color correspondence according to the invention;
- Figure 2 illustrates an example of implementation of the method according to the invention in case of two images, a first image, or reference view, and a second image, or test view, with geometrically normalized neighbourhoods of a feature correspondence from first and second images $I^L$, $I^R$ with low spatial accuracy (presence of horizontal shift) marked by ellipses, with two features correspondences $F_1^L$ <-> $F_1^R$ and $F_2^L$ <-> $F_2^R$ in these two images;
- Figure 3 illustrates one set of local color correspondences obtained for one of the feature correspondences illustrated on figure 2;
- On figure 4, black pixels corresponds to color correspondences which do not follow a linear model(s), that are not taken into account in color correspondences selected on figure 5;
- Figure 5 illustrates the color correspondences that are selected from the color correspondences represented on figure 3 using robust linear fitting based on iteratively re-weighted least squares.

Description of embodiments

The steps of the various elements of the invention may be provided through the use of dedicated hardware as well as hardware capable of executing software in association with appropriate software. The hardware may notably include, without limitation, digital signal processor ("DSP") hardware, read-only memory ("ROM") for storing software, random access memory ("RAM"), and non-volatile storage.

Such an hardware combined with such an appropriate software would then make a system comprising notably:

- a receiving module for receiving a pair of a first and a second images,
- a feature correspondences building module for building a set of feature correspondences between feature points of the first image and feature points of the second image,
- a warping module configured for geometric normalization and to bring pixels of the neighborhood of any feature point of the first image into spatial correspondence with pixels of the neighborhood of the corresponding feature point of the second image, by warping at least one of these two neighborhoods,
- a generating module for generating a set of at least three color correspondences by bringing in correspondence colors of pixels having spatial positions that are brought in spatial correspondence by the warping module in the neighborhoods of the feature points of a feature correspondence,
- a denoising module configured for selecting, in a set of local color correspondences generated by the generating module, color correspondences that fit a color correspondence model according to a defined criteria, resulting in a set of local robust color correspondences,
- a color compensation module configured for compensating color differences between the two images of the pair by replacing the colors of an image of this pair by their corresponding colors according to the set of robust color correspondences provided by the denoising module.

According to a general and non-limiting embodiment, using the above modules of the system, the invention proposes a method to calculate a set of pairs of corresponding colors, each pair having one color from a first image and a corresponding color from the second image, colors being described by color coordinates, given a set of feature correspondences, each feature correspondence being a pair of feature points, simply called features, each pair having a first feature from the first image and a corresponding second feature in the second image, a feature point being a spatial position in the image and its spatial neighborhood, the method comprising notably, for each feature correspondence between a feature of the first image and a feature of the second image, the following steps:

1. warping the spatial neighborhood of at least one of these two features such that after warping the spatial positions of pixels in the neighborhood of the first feature correspond to spatial positions of pixels in the neighborhood of the second feature. After such a warping, the spatial positions of pixels in the neighborhoods of the corresponding feature points correspond spatially themselves to each other.

2. selecting at least three first pixels at different spatial positions in the spatial neighborhood of the first feature and the corresponding at least three second pixels at the corresponding spatial positions in the neighborhood of the second feature, and bringing the color of each first pixel selected in the neighborhood of the first feature in correspondence with the color of the corresponding second pixel selected in the neighborhood of the second feature, resulting in a set of at least three local color correspondences.

3. Fitting a color model to at least one color coordinate of the corresponding colors of the resulted set of local color correspondences such that, in each local color correspondence of the resulted set between a first color and a second color, the color model maps the at least one color coordinate of said first color to the corresponding at least one color coordinates of said second color.

4. Optionally, eliminating at least one color correspondence from the set of local color correspondences that has a second color with a color coordinate being further away than a given threshold from the corresponding, mapped color coordinate of the first color of said color correspondence, the mapping done using said at least one color model, resulting into a reduced but robust set of local color correspondences.

Then, compensate the colors of the first image as follows:

5. From the set of robust color correspondences built at the end of step 3 or 4 above, building a color look up table able to transform color coordinates of colors from the first image into color coordinates of colors of the second image,

6. transforming color coordinates of colors from the first image into color coordinates of colors of the second image, thus resulting in a color compensated image.

In the following, in reference to figure 1, we present a non-limiting and more specific example of implementation of the method according to the invention. Here, we focus on two images (or views) from a same scene and aim at the calculation of a look up table that is able to map the colors of the first image - indicated by a superscript or subscript letter L - so that they are closer to the colors of the second image - indicated by the superscript letter R: images $I^L$ and $I^R$. The application of this Look Up Table to the colors of the first image will then correspond to a color mapping of this image that will compensate the color differences between the two images. We assume that the colors of the images are encoded using three color channels R,G,B for red, green, blue.

This specific, non-limiting embodiment comprises several steps as follows.

## FEATURE CORRESPONDENCES

The first step is to generate or build feature correspondences between the first and the second image. Detection of features in these images as well as creating correspondences between these detected features is well-known. For example, Lowe presents in his paper entitled "Distinctive image features from scale-invariant keypoints" published in the. Int'l J. Computer Vision no. 60 pages 91-110 a method called "SIFT" that first detects features in images and then estimates correspondences between the features of two images. Each feature is defined by its position, its scale and its orientation. The position is the spatial coordinates in 2D image space. The scale indicates the size of the region centered around the position that has been used to detect the feature. A large scale indicates a large region and a small scale indicates a small region. The orientation indicates the angular orientation of the feature, between 0 and 360°. Lowe then proposes to describe each feature by a descriptor. Two features from two images are then detected to be a feature correspondence if their descriptors are close. Between the first image and the second image, M feature correspondences

$$F_i^{\mathbf{L}} \leftrightarrow F_i^{\mathbf{R}}$$ with i=0..M-1 are detected in this known manner. Note that other algorithms than SIFT might be used to obtain such feature correspondences.

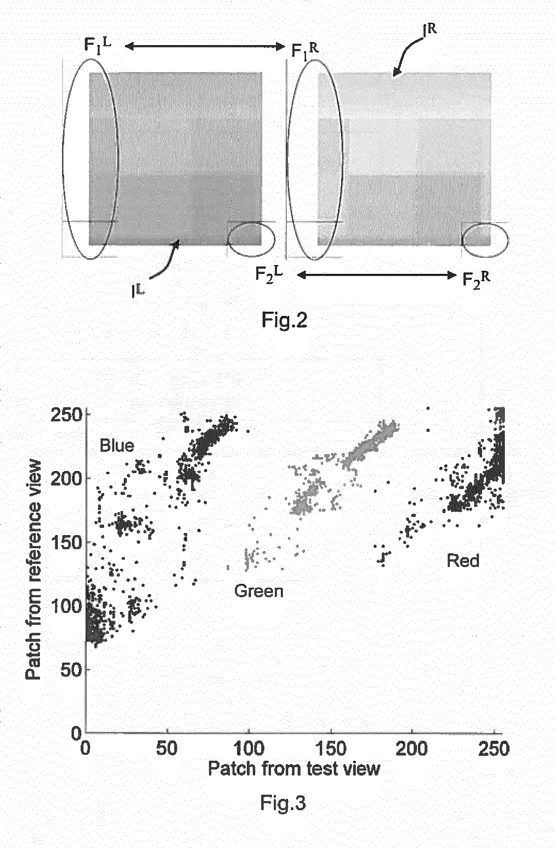

Figure 2 illustrates two features correspondences $F_1^L \leftrightarrow F_1^R$ and $F_2^L \leftrightarrow F_2^R$ between two images $I^L$ and $I^R$. Figure 2 shows an example of the geometrically normalized neighborhood of a feature correspondence for two images $I^L$ and $I^R$. In figure 2, the feature neighborhoods are magnified for visualization. Visually, figure 2 seems to be a precise good feature correspondence. Yet, the accuracy of the feature location is low, as marked by the ellipses in this figure. As explained below, low accuracy in location, scale/shape, orientation of corresponding features creates noisy color correspondences, as shown on figure 3.

**LOCAL SETS OF COLOR CORRESPONDENCES**

The second step is collecting M local sets of color correspondences from these M feature correspondences. A feature correspondence as detected above is known to refer to two corresponding image regions, i.e. two corresponding spatial neighborhoods of feature points, wherein each neighborhood includes its feature point and is defined by parameters such as position, scale, and orientation. Given these parameters, the spatial neighborhoods of corresponding features are then defined in both images $I^L$ and $I^R$. In ideal case, within the calculated neighborhood of a feature of the first image, each pixel of this neighborhood has a corresponding pixel in the corresponding neighborhood of the corresponding feature of the second image.

**GEOMETRIC NORMALIZATION**

When corresponding neighborhoods do not match in shape, size and orientation, an additional geometric normalization step is preferably added that is adapted in a manner known per se to match the shape, size and orientation of the corresponding neighborhoods. Such a geometric normalization of corresponding neighborhoods correspond to a warping of at least one of these neighborhoods adapted such that, after warping, these spatial neighborhoods correspond spatially themselves to each other. This warping process is usually an approximation and, after warping, the correspondence between the spatial positions of pixels in the neighborhood of the first feature and the spatial positions of pixels in the neighborhood of the second feature is usually still noisy.

Let us assume that between images $I^L$ and $I^R$, the feature $F_i^L$ located at $x^L$, $y^L$ in the first image $I^L$ and the feature $F_i^R$ located at $x^R$, $y^R$ in the second image $I^R$ correspond one with the other.

Let us extract two neighborhoods of these corresponding features $F_i^{\mathbf{L}} \leftrightarrow F_i^{\mathbf{R}}$ from the two images, which are defined by their respective scales $s^L$ and $s^R$ that is, of size $s^L \times s^L$ and $s^R \times s^R$, respectively. Here, each pixel $P^L$ in a neighborhood $s^L \times s^L$ expects a corresponding pixel $P^R$ in the corresponding neighborhood $s^R \times s^R$.

The color $R^L$, $G^L$, $B^L$ associated to any pixel $P^L$ of this neighborhood $s^L \times s^L$ will correspond to the color $R^R$, $G^R$, $B^R$ associated to its corresponding pixel $P^R$ of the corresponding neighborhood $s^R \times s^R$. All the color correspondences such based on two corresponding neighborhoods themselved based on two corresponding features $F_i^{\mathbf{L}} \leftrightarrow F_i^{\mathbf{R}}$ form a set of $N_i$ local color correspondences $(R_j^{\mathbf{L}}, G_j^{\mathbf{L}}, B_j^{\mathbf{L}}) \leftrightarrow (R_j^{\mathbf{R}}, G_j^{\mathbf{R}}, B_j^{\mathbf{R}})$ with $j=0..N_i-1$.

The building of a set of local color correspondences is repeated for each of the M detected feature correspondences $F_i^{\mathbf{L}} \leftrightarrow F_i^{\mathbf{R}}$ with $i=0..M-1$, such as to obtain M sets of local color correspondences.

Practically, these sets of local color correspondences will have generally severe noise not only due to the approximate nature of geometrical warping, but also due to image noise, complex scene geometry, covering, uncovering, as well as due to motion in the scene. Ultimately, such noisy color correspondences could make failing the color mapping of the first image such that the resulting colors might not be close enough to the second image. That is why the next step is dedicated to the improvement of the "robustness" of these sets.

An **example** will now be given of the warping of spatial neighborhoods of feature points, of the creation of direct pixel-by-pixel spatial correspondences in two warped corresponding neighborhoods, and of the building of a set of local color correspondences from these pixel-by-pixel spatial correspondences.

In order to achieve geometric warping of corresponding feature neighborhoods, we apply for instance affine, geometric normalization for each $F_i^{\mathbf{L}} \leftrightarrow F_i^{\mathbf{R}}$, such as described in 2005 by Mikolajczyk et al. in their paper entitled "A performance evaluation of local descriptors" published in IEEE Trans. on Pattern Analysis and Machine Intelligence, Vol. 27, pages 1615-1630. After geometric normalization, corresponding feature neighborhoods are geometrically aligned to each other. We conduct for instance affine normalization by the square root of the second moment matrix,

$M_L^{\frac{1}{2}}$ and $M_R^{\frac{1}{2}}$ computed on each feature neighborhood separately. When $x_L \leftrightarrow x_R$ are two corresponding 2D feature locations with $x_L = \begin{pmatrix} x^L \\ y^L \end{pmatrix}$ and $x_R = \begin{pmatrix} x^R \\ y^R \end{pmatrix}$, we normalize their neighborhoods by transformation

$$x_L' = M_L^{\frac{1}{2}} x_L \quad \text{and} \quad x_R' = M_R^{\frac{1}{2}} x_R.$$ After that, $x'_L$ and $x'_R$ are related by a known rotation matrix $\Theta$

according to $x_L' = \Theta x_R'.$

We can now create direct pixel-by-pixel spatial correspondence in two corresponding neighborhoods. To a spatial position of the image $I_R$ we associate the corresponding position in the image $I_L$ according to $x_L' \to \Theta x_R'$. We pick up the colors from each of this two corresponding positions forming two corresponding colors. We call two corresponding colors a color correspondence. When doing this for all positions in a given spatial neighborhood defined by the scale of the features, we get a **local set of color correspondences.** Not all of the color correspondences of a local set are free of errors. There may be wrong color correspondences caused by effects such as occlusion. Furthermore, the colors might be slightly erroneous for example because of imprecise affine normalization.

Figure 3 illustrates a set of local color correspondences obtained for one of the feature correspondences such as illustrated on figure 2. As shown on this figure 3, low accuracy in location, scale/shape, orientation of corresponding features of figure 2 creates noisy color correspondences. That is why the next step is dedicated to the improvement of the "robustness" of the color correspondences in each set.

**ROBUST LOCAL SETS OF COLOR CORRESPONDENCES**

In the third step, we will generate robust local sets of color correspondences, despite of low accuracy of some feature correspondences, $F_i^{\mathbf{L}} \leftrightarrow F_i^{\mathbf{R}}$.

For this step, the general approach is to locally process the neighborhood of each feature correspondences before selecting the color correspondences. Concretely, as described below with more details, for each feature corre-

spondence $F_i^{\mathbf{L}} \leftrightarrow F_i^{\mathbf{R}}$, a locally linear color mapping model is fit to each color channel of the $N_i$ local color

correspondences of the set $\left( R_j^{\mathbf{L}}, G_j^{\mathbf{L}}, B_j^{\mathbf{L}} \right) \leftrightarrow \left( R_j^{\mathbf{R}}, G_j^{\mathbf{R}}, B_j^{\mathbf{R}} \right)$ with j=0..$N_i$-1 built from this feature

correspondence $F_i^{\mathbf{L}} \leftrightarrow F_i^{\mathbf{R}}.$ As a whole, in each set of local color correspondences as obtained above, color correspondences that fit a color correspondence model according to a defined criterion are selected to build a set of local robust color correspondences

This local color model is used to improve the robustness of the color correspondences of each set. Such a local color model is preferably a color mapping model which is linear in the RGB color space.

The linear robust fit of the method according to the invention is not limited to three color channels. For example, if there are four color channels, four local models are calculated.

The robust fit of the method according to the invention is not limited to linear models. Linear models often fail in modeling the difference of color coordinates between left and right images if the range of color coordinates is large. It is a known method to approximate non-linear functions in a local range of values by a linear function. Using a linear color model, it can be expected that a minority of colors having color coordinates very different from the majority of colors will not be well described by a linear model. It can be therefore advantageous to use a non-linear model such as an exponential model, a quadratic model, a model based on splines or any other type of non-linear function. Since the model is fitted to a local set of color correspondences with is usually limited in number, it is advantageous to use a non-linear color model with a limited number of parameters.

An **example** will now be given of a linear robust fit that can be used to implement this step of the method according to the invention.

For each color channel, we robustly fit a locally linear model to the color coordinates of the colors of a local set of color correspondences. For such a robust fit, we use the well-known method of iteratively re-weighted least squares such as described by P.W. Holland and R.E. Welsch in their paper entitled "Robust regression using iteratively reweighted least-squares" published in 1977 in the Communications in Statistics-Theory and Methods, no. 6, vol. 9, pages 813-827.

More precisely, for each color channel of a local color correspondence of this set, $\phi$ (e.g. *R* or *G* or *B*), we iteratively compute the following robust least square solution:

$$\beta_\phi^{t+1} = (\Phi^{\mathbf{L}^T} W^{(t)} \Phi^{\mathbf{L}})^{-1} \Phi^{\mathbf{L}^T} W^{(t)} \phi^{\mathbf{R}}$$

Here, for n color correspondences of the set of local color correspondences, $\Phi^L$ is a nx2 matrix, where the first column is all ones and the second column is composed of the color coordinates $\phi_i$ (e.g., $R_i$ or $G_i$ or $B_i$) of the corresponding colors from image $I_L$ according to

$$\Phi^L = \begin{pmatrix} 1 & \emptyset_0 \\ 1 & \vdots \\ 1 & \emptyset_{n-1} \end{pmatrix}.$$

On the other hand, $\phi^R$ is a column vector showing in the same way the color coordinates of the corresponding colors from image $I_R$. For each color channel $\Phi$, $\beta_\phi$ is a $2 \times 1$ vector representing the estimated model parameters of the local, linear color model of the color coordinates of this channel.

$W^{(t)}$ is the diagonal weight matrix which is initialized as $W^{(0)} = 1$ where t is the iteration number. As motivated by P.W. Holland and R.E. Welsch, we update W by the following equation where $\delta$ is usually a small number:

$$W^{(t)} = \frac{1}{max(\delta, |\phi^{\mathbf{R}} - \Phi^{\mathbf{L}} \beta_\phi^t|)}$$

For example, for the red channel the parameter vector $\beta_R$ contains the parameters $g_R$ and $h_R$ that map the color coordinate $R^L$ from a color of the first image to the color coordinate $R^{R'}$ of the corresponding color of the second image according to $R^{R'} = g_R + h_R R^L$.

For each color channel $\Phi$, we use the estimated model parameters $\beta_\phi$ in order to robustly select the best color correspondences from the local set of color correspondences. We keep (as a robustly selected color correspondence)

a color correspondence $(R_j^{\mathbf{L}}, G_j^{\mathbf{L}}, B_j^{\mathbf{L}}) \leftrightarrow (R_j^{\mathbf{R}}, G_j^{\mathbf{R}}, B_j^{\mathbf{R}})$ from the local set of color correspondences only if all three color coordinates of this color correspondence follow the respective estimated color models within a precision of +/-$t_\Phi$ and $t_\Phi$ being a threshold. The threshold $t_\Phi$ can be chosen to be the standard deviation of differences between the model $g_\Phi + h_\Phi \Phi^L$ of the color channel $\Phi$ and the actual color coordinate $\Phi^R$ of all colors of the local set of color correspondences. Another possibility is to choose the threshold according to the robust standard deviation of residuals such as proposed by Motulsky and Brown in their paper entitled "Detecting outliers when fitting data with nonlinear regression - a new method based on robust nonlinear regression and the false discovery rate" published in BMC bioinformatics 7(1) in 2006. Another possibility is to apply a threshold T in one step to all color channels. For example in case of three color channels red, green and blue, the 3D distance in R,G,B color space between $\left(R_j^R, G_j^R, B_j^R\right)$ and the models $\left(g_R + h_R R_j^L, g_G + h_G G_j^L, g_B + h_B B_j^L\right)$ is compared to a single threshold T.

The resulting robustly selected color correspondences form a **set of local, robust color correspondences.** Other thresholds can be used.

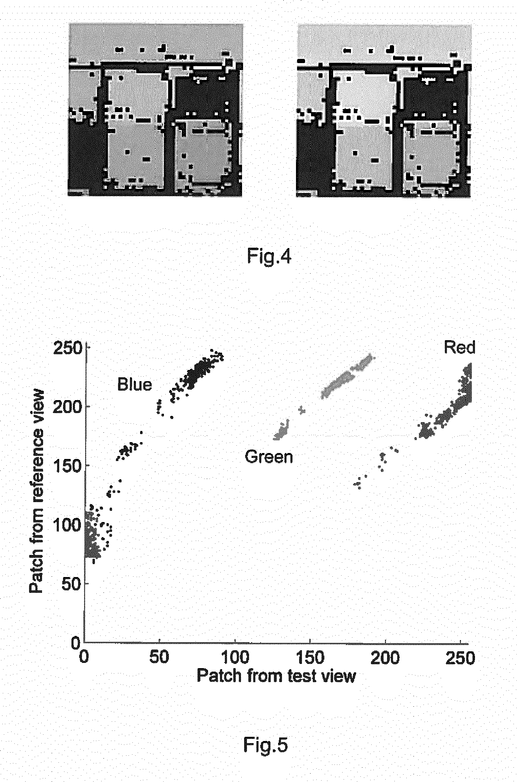

Figure 5 illustrates the color coordinates of color correspondences that are selected from the color correspondences represented on figure 3 using the above robust linear fitting based on iteratively re-weighted least squares. A comparison between figures 3 and 5 clearly shows that the color coordinates of the selected color correspondences shown in figure 5 are far closer to linear models than those of figure 3. Pixels having colors not following these linear model(s) are shown as black pixels in figure 4 and are not taken into account in the selected color correspondences shown on figure 5.

**COLOR LOOK UP TABLE TO BE USED FOR COLOR COMPENSATION**

In the last step, we put all sets of robustly selected local color correspondences together, eliminate double color correspondences and then build from these sets a global color look up table.

Then, using the color compensation module, this color look up table is applied to each color of the first image of the pair, resulting in a color compensated first image.

An important benefit of the method according to the invention as exemplified above is that despite the error in feature correspondences, we are able to collect color correspondences robustly.

As a whole, the method according to the invention has the following advantages over known methods:

1. Robust corresponding colors between two images with given geometrical feature correspondences (GFC) can be found even if the GFC are noisy.
2. Robust corresponding colors extracted from the spatial neighborhood of a single GFC have reduced noise compared to known methods.
3. Corresponding colors can be extracted even from GFC close to object borders showing covering and uncovering effects.
4. Corresponding colors can be extracted even from GFC belonging to surfaces with high curvature.

It is to be understood that the invention may be implemented in various forms of hardware, software, firmware, special purpose processors, or combinations thereof. The invention may be notably implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

While the present invention is described with respect to particular examples and preferred embodiments, it is understood that the present invention is not limited to these examples and embodiments. The present invention as claimed therefore includes variations from the particular examples and preferred embodiments described herein, as will be apparent to one of skill in the art. While some of the specific embodiments may be described and claimed separately, it is understood that the various features of embodiments described and claimed herein may be used in combination.

**Claims**

1. Method for building a set of color correspondences from a set of feature correspondences between features points in a plurality of different images, the method comprising, for each feature correspondence of said set:

   - warping the spatial neighborhood of at least one of the corresponding feature points of said feature correspondence such that, after warping, the spatial positions of pixels in the neighborhoods of the feature points corresponding to each other in said feature correspondence over the different images of said plurality correspond spatially themselves to each other,
   - bringing in correspondence the colors of pixels having corresponding spatial positions in the neighborhoods of the feature points of said feature correspondence, to provide a set of at least three local color correspondences.

2. Method for building a set of color correspondences according to claim 1, comprising also:

   - in each provided set of local color correspondences, selecting color correspondences that fit a color correspondence model according to a defined fitting criteria, to provide a set of local robust color correspondences.

3. Method for building a set of color correspondences according to claim 1, wherein each color of said pixels is represented by a color coordinate in each of the different color channels of a color space, comprising also:

   - in each provided set of local color correspondences, selecting, among said local color correspondences of said set, any color correspondence having a color which, after being mapped by a color model into mapped colors have color coordinates in the at least one color channel that are distant less than a defined threshold from the corresponding color coordinates of the other colors of this color correspondence, thus resulting in a set of local robust color correspondences.

4. Method for building a set of color correspondences according to claim 3, wherein said color model is based on a linear relationship between the color coordinates in the said at least one color channel of a color and the color coordinates in the same at least one color channel of said mapped colors.

5. Method for compensating color differences between different images comprising:

- building a set of feature correspondences between features points of said different images,
- building a set of local color correspondences from said set of feature correspondences according the method of claim 1 or a set of local robust color correspondences from said set of feature correspondences according the method according to any of claims 2 to 4, and compensating color differences between the different images of said plurality by replacing the colors of at least one image of said plurality by their corresponding colors according to said built set of color correspondences or to said built set of robust color correspondences.

6. Apparatus for building a set of color correspondences in a plurality of different images, comprising:

- a receiving module for receiving said plurality of images,
- a feature correspondences building module for building a set of feature correspondences between features points in the plurality of different images received by said receiving module,
- a warping module configured for warping the spatial neighborhood of at least one of the corresponding feature points of a feature correspondence built by said feature correspondences building module such that, after warping, the spatial positions of pixels in the neighborhoods of the feature points corresponding to each other in said feature correspondence over the different images of said plurality correspond spatially themselves to each other, and
- a generating module for generating a set of at least three local color correspondences by bringing in correspondence colors of pixels having spatial positions that are brought in spatial correspondence by the warping module in the neighborhoods of the feature points of said feature correspondence.

7. Apparatus according to claim 6, comprising also:

- a denoising module configured for selecting, in a set of local color correspondences generated by said generating module, color correspondences that fit a color correspondence model according to a defined fitting criteria, resulting in a set of local robust color correspondences.

8. System for compensating color differences between different images comprising:

- an apparatus for building a set of color correspondences in a plurality of different images according to claim 6, and
- a color compensation module configured for compensating color differences between the different images of said plurality by replacing the colors of at least one image of said plurality by their corresponding colors according to the set of color correspondences.

9. System for compensating color differences between different images comprising:

- an apparatus for building a set of color correspondences in a plurality of different images according to claim 7, and
- a color compensation module configured for compensating color differences between the different images of said plurality by replacing the colors of at least one image of said plurality by their corresponding colors according to the set of robust color correspondences built by said apparatus.

Color correspondence
MODEL

Images

Build a set of features correspondences

Geometric normalization.
Bring pixels of neighborhoods of
corresponding features in SPATIAL
correspondence by WARPING.

Generating a set of local color
correspondences

Set of modeled color
correspondences

Set of local color
correspondences

Fitting criteria

Do
Each local color correspondence
FIT with a Modeled color
correspondence ?

NO

YES

Ignore
local color
correspondence

Set of ROBUST local
color correspondences

Fig. 1

Fig.2

Fig.3

Fig.4

Fig.5

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PEI-KUEI TSUNG ET AL: "Hybrid color compensation for virtual view synthesis in multiview video applications", IEEE INTERNATIONAL SYMPOSIUM ON CIRCUITS AND SYSTEMS. ISCAS 2010 - 30 MAY-2 JUNE 2010 - PARIS, FRANCE, IEEE, US, 30 May 2010 (2010-05-30), pages 121-124, XP031724240, ISBN: 978-1-4244-5308-5 * abstract * * figure 4 * * page 122, right-hand column, line 1 - page 123, right-hand column, line 29 * ----- | 1-9 | INV. G06T5/00 G06T5/50 G06T7/40 H04N1/60 |
| X | HASAN S F ET AL: "Robust Color Correction for Stereo", VISUAL MEDIA PRODUCTION (CVMP), 2011 CONFERENCE FOR, IEEE, 16 November 2011 (2011-11-16), pages 101-108, XP032074523, DOI: 10.1109/CVMP.2011.18 ISBN: 978-1-4673-0117-6 * abstract * * page 101, right-hand column, lines 10-27 * * page 102, left-hand column, line 44 - right-hand column, line 6 * * page 103, left-hand column, lines 26-33 * * sections "3.2 Implementation of the new method", "3.3 Neighborhood comparison methods" * * figures 18,19 * ----- -/-- | 1-9 | TECHNICAL FIELDS SEARCHED (IPC) G06T H04N |

The present search report has been drawn up for all claims

| Place of search | Date of completion of the search | Examiner |
|---|---|---|
| Munich | 24 February 2015 | Eckert, Lars |

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FARIDUL HASAN SHEIKH ET AL: "Approximate Cross Channel Color Mapping from Sparse Color Correspondences", 2013 IEEE INTERNATIONAL CONFERENCE ON COMPUTER VISION WORKSHOPS, IEEE, 2 December 2013 (2013-12-02), pages 860-867, XP032575686, DOI: 10.1109/ICCVW.2013.118 [retrieved on 2014-03-04] * abstract * * page 861, right-hand column, line 7 - page 862, left-hand column, line 46 * ----- | 1-9 | |
| | | | **TECHNICAL FIELDS SEARCHED (IPC)** |

The present search report has been drawn up for all claims

| Place of search | Date of completion of the search | Examiner |
|---|---|---|
| Munich | 24 February 2015 | Eckert, Lars |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Non-rigid dense correspondence with applications for image enhancement. *Proc. of ACM SIGGRAPH,* vol. 70 (9
- **FERRARI et al.** Simultaneous object recognition and segmentation by image exploration. *ECCV,* 2004
- **CHO et al.** Co-recognition of image pairs by data-driven monte carlo image exploration. *ECCV,* 2008
- Distinctive image features from scale-invariant keypoints. *Int'l J. Computer Vision,* vol. 60, 91-110

- **MIKOLAJCZYK et al.** A performance evaluation of local descriptors. *IEEE Trans. on Pattern Analysis and Machine Intelligence,* vol. 27, 1615-1630
- **P.W. HOLLAND ; R.E. WELSCH.** Robust regression using iteratively reweighted least-squares. *Communications in Statistics-Theory and Methods,* 1977, vol. 9 (6), 813-827
- Detecting outliers when fitting data with nonlinear regression - a new method based on robust nonlinear regression and the false discovery rate. *BMC bioinformatics,* 2006, vol. 7 (1